# EUROPEAN PATENT SPECIFICATION

(11) **EP 0 826 578 B1**
(45) Date of publication and mention of the grant of the patent: **20.08.2003**
(21) Application number: 97115257.4
(22) Date of filing: 03.09.1997
(51) Int. Cl.: B62D 33/063

(54) **Apparatus for moving a tractor cab relative to a tractor body**
Vorrichtung zum Verschieben eine Schlepperkabine relativ zu einem Schlepperaufbau
Dispositif pour déplacer une cabine de tracteur par rapport à une caisse de tracteur

(30) Priority: 03.09.1996 US 697944; 03.09.1996 US 697945
(43) Date of publication of application: 04.03.1998
(73) Proprietor: CATERPILLAR INC., Peoria Illinois 61629-6490 (US)
(72) Inventor: Glass, Manfred, (NMI), 84048 Sandelzhausen (DE); Schmidbauer, Josef, (NMI), 84079 Bruckberg (DE); Richtsfeld, Viktor, (NMI), 84048 Mainburg (DE); Ukens, Klaus, (NMI), 85410 Haag/A (DE)
(74) Representative: Wagner, Karl H., Dipl.-Ing.

(56) References cited:
- EP-A- 0 641 708
- WO-A-89/01435
- US-A- 3 721 077
- PATENT ABSTRACTS OF JAPAN vol. 005, no. 072 (M-068), 14 May 1981 (1981-05-14) & JP 56 021977 A (TOYODA AUTOM LOOM WORKS LTD), 28 February 1981 (1981-02-28)

## Description

### Background of the Invention

The present invention generally relates to moving a tractor cab relative to a tractor body.

Material handling machines, such as grapple tractors (hereinafter referred to as tractors), are typically used in projects which require the movement of significant amounts of scrap. These types of tractors generally include a grapple or magnet operatively linked to a boom and arm. Hereinafter, the boom and arm is collectively referred to as the grapple arm. The primary function of the grapple arm is to move the grapple in such a manner that it can grasp and transfer the scrap from one location to another. These types of tractors also include a cab that houses the operator and the controls used to direct the movements of the grapple arm, and therefore the grapple.

These tractors are often used to load or unload scrap from truck beds or from barges. However, using such tractors to perform the aforementioned loading or unloading function has a significant drawback. That is, it is very difficult for the operator of the tractor to see down into the truck bed or barge from his or her position in the cab. The operator's inability to see down into the truck bead or barge impedes his or her ability to properly control the movement of the grapple arm and grapple. As a result, the operator's ability to efficiently operate the grapple arm and grapple decreases.

In order to overcome the above described problem, several tractor models are constructed to include an adjustable cab riser apparatus. Such an apparatus allows the operator of the tractor to raise the cab to the desired height above the tractor body. Having the cab positioned at an appropriate height above the tractor body allows the operator to see into the truck bed, barge or container being loaded or unloaded, and therefore facilitates the proper control of the grapple arm and grapple.

Some cab riser apparatus are constructed to include a large unitary bracket member directly welded onto the frame of the tractor body. These apparatus also include a hydraulic cylinder and a number of support arms. The hydraulic cylinder and support arms are connected to the bracket member and a brace. The brace is connected to a platform member for supporting the tractor cab. Generally, the aforementioned cab riser components are arranged such that the actuation and extension of the hydraulic cylinder causes the brace, platform member, and therefore the tractor cab, to rise above the tractor body to a desired height. However, as will be discussed below, present cab riser apparatus suffer from several drawbacks.

Document EP 0 641 708 A1 describes an apparatus according to the preamble of claim 1

One problem with the above described arrangement is that the hydraulic cylinder is less stable in its extended position, as compared to when it is in its retracted position. For example, in its extended position the hydraulic cylinder has a greater tendency to move about or "wobble" due to forces it encounters during use of the tractor. Since the hydraulic cylinder is attached to the platform member via the brace, its decreased stability is communicated to the platform member, and thus the cab. Therefore, the cab, in its raised position, also has a tendency to move about or "wobble" during use of the tractor.

Another problem with certain types of cab riser apparatus relates to the position of the cab once it is raised above the tractor body. For example, the spatial relationship of the support arms, bracket and brace typically causes the platform member to tilt relative to the tractor body when moved to an elevated position. Since the platform member supports the cab, the cab also tilts when moved to an elevated position. The tilting of the cab can be distracting or uncomfortable for the operator of the tractor.

Additional problems with prior art cab riser apparatus include (1) their inability to be retrofit onto existing tractor frames; (2) they are relatively bulky, and thus require a significant amount of space; and (3) the use of a large unitary bracket member is difficult to fabricate, and then weld onto a frame of the tractor body.

Therefore, in light of the above discussion, it is apparent that a cab riser apparatus that addresses the above described problems is desirable. The present invention provides such an apparatus. The cab riser apparatus of the present invention utilizes a number of "inverted hydraulic cylinders" and support arms arranged in a parallelogram linkage between a brace and a bracket member to elevate a tractor cab.

In use, the cab riser of the present invention provides an apparatus for elevating a cab which is relatively stable and thus inhibits the cab's movement during use of the tractor. Moreover, the present invention provides a cab riser apparatus wherein the cab does not tilt relative to the tractor body when located in any elevated position. In addition, the present invention provides a cab riser apparatus which (1) can be retrofit onto existing tractor bodies; (2) is relatively compact and thus requires less space when mounted; and (3) utilizes a bracket assembly which is relatively easy to fabricate, and then mount onto a tractor body.

### Summary of the Invention

In accordance with one embodiment of the present invention, there is provided an apparatus for moving a tractor cab relative to a tractor body. The apparatus includes a bracket having a first end and a second end; the first end of the bracket being secured to the tractor body and the second end of the bracket being spaced apart from the tractor body. The apparatus also includes a first support arm having a first end and a second end, the first end of the first support arm being secured to the tractor cab and the second end of the first support arm being secured to the second end of the bracket. The apparatus further includes a hydraulic cylinder having a first end and a second end, the first end of the hydraulic cylinder being secured to the tractor cab and the second end of the hydraulic cylinder being secured to the second end of the bracket, wherein (1) the hydraulic cylinder is at a minimum extension when the tractor cab is moved to a raised position relative to the tractor body, and (2) the hydraulic cylinder is at a maximum extension when the tractor cab is moved to a normal position relative to the tractor body.

Pursuant to another embodiment of the present invention there is provided a second mounting member on the bracket and a first mounting member on a frame member of the tractor. Means is provided for securing the first and second mounting members to one another at a first orientation. The members can be separated and reattached at a different, second orientation.

The above and other objects, features, and advantages of the present invention will become apparent from the following description and attached drawings.

### Brief Description of the Drawings

FIG. 1 is a side elevational view of a tractor having a tractor cab located at a first position relative to a tractor body which incorporates the features of the present invention therein;

FIG. 2 is a side elevational view of the tractor of FIG. 1, with the tractor cab located at a second position relative to the tractor body;

FIG. 3 is a fragmentary side elevational view of a tractor cab rising apparatus which is utilized in the tractor of FIGS. 1 and 2;

FIG. 4 is a cross sectional view of a hydraulic cylinder of the tractor cab rising apparatus of FIG. 3;

FIG. 5 is a side elevational view of a bracket member of the tractor cab rising apparatus of FIG. 3;

FIG. 6 is a side elevational view of a frame member of the tractor of FIGS. 1 and 2;

FIG. 7 is a cross sectional view taken along the line 7-7 of FIG. 6;

FIG. 8 is a cross sectional view taken along the line 8-8 of FIG. 7;

FIG. 9 is a cross sectional view similar to FIG. 8 which shows the relationship between the frame member of FIG. 8 and the bracket member of FIG. 5.

### Detailed Description of the Preferred Embodiment

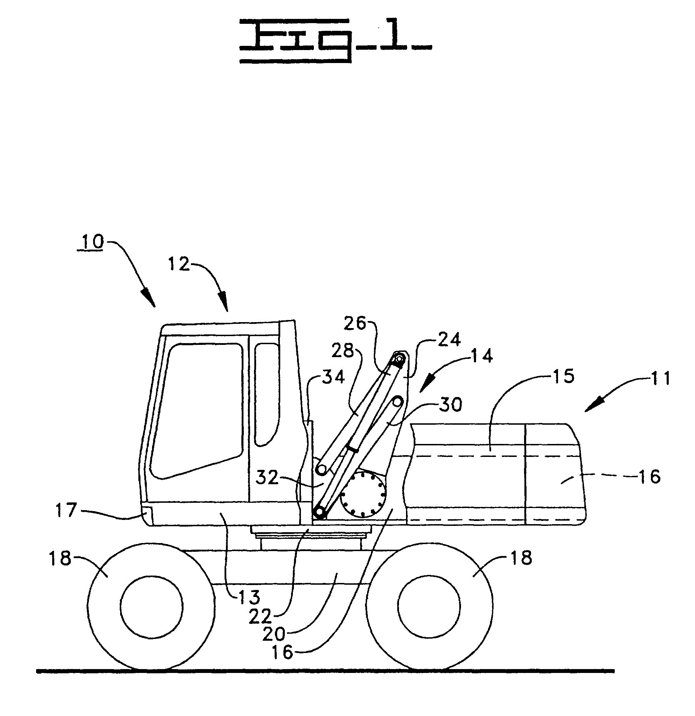

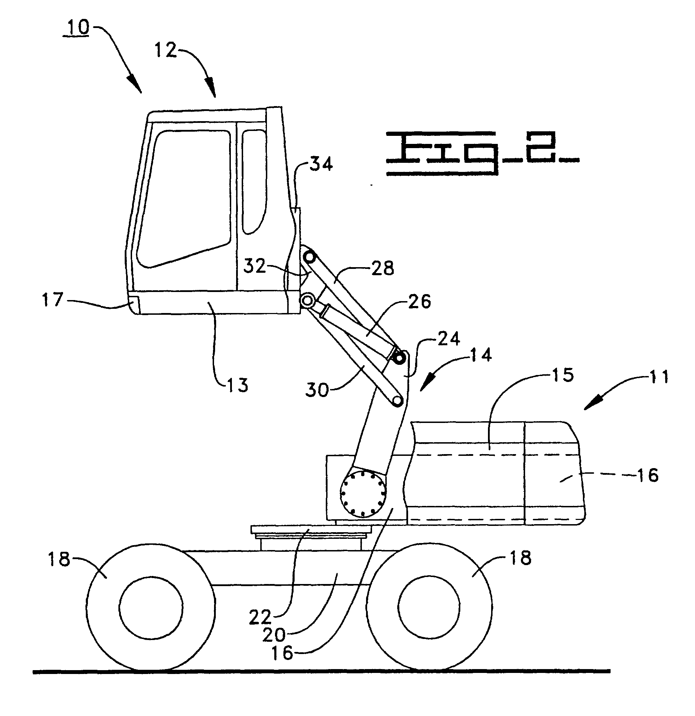

Referring to FIGS. 1 and 2, there is shown a tractor 10 with its grapple arm removed for clarity of description. The tractor 10 includes a body 11, a cab 12, a cab rising apparatus 14, a chassis 20, and a number of wheels 18. A pedestal member 22 is disposed on the chassis 20, and supports the cab 12 and the body 11.

The tractor 10 is shown with the cab 12 in a normal position in FIG. 1. The cab 12 is in a normal position when it has not been raised relative to the body 11. In FIG. 2, the tractor 10 is shown with the cab 12 in a raised position. The cab 12 is shown spaced apart from the body 11 at a location above the body 11.

The cab 12 defines a housing in which an operator of the tractor 10 sits. The cab 12 includes a substantially planar platform member 13 and is fastened thereto. The platform member 13 includes a support member 34. The support member 34 has a brace 32 mounted thereto. The brace 32 couples the cab 12 to the cab rising apparatus 14.

A portion of a body panel 15 has been removed from the body 11 in FIGS. 1 and 2 in order to more clearly show the cab rising apparatus 14. The cab rising apparatus 14 includes a bracket member 24, a pair of support arms 28, 30, and a hydraulic cylinder 26.

A frame member 16 is horizontally disposed along the lower edge of the body 11 as shown in FIGS. 1 and 2. The bracket member 24 is connected to the frame member 16 in order to couple the cab 12 to the body 11.

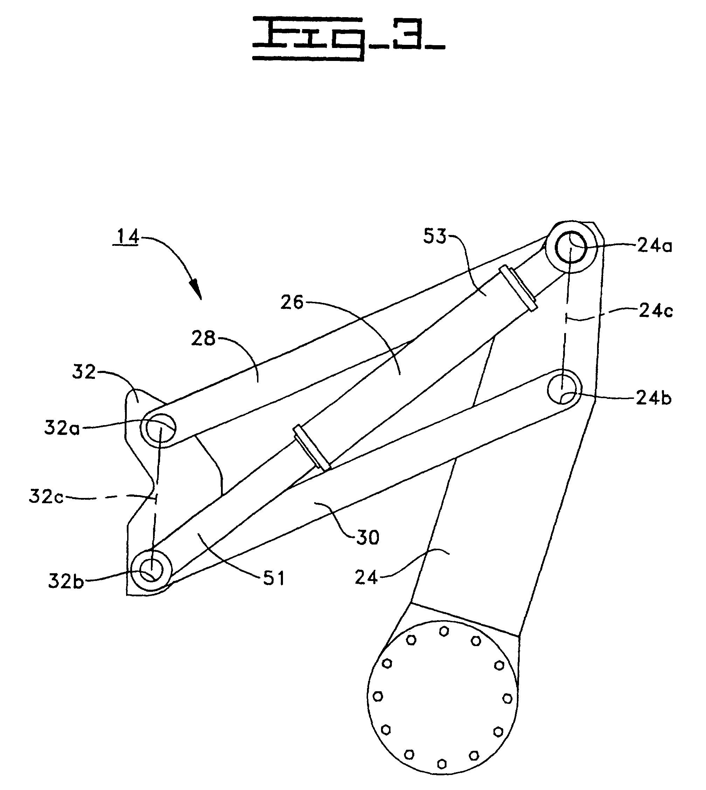

Referring now to FIG. 3, the cab riser apparatus 14 is shown in more detail. The support arm 28 is pivotally coupled at a first end to the bracket member 24 by a pin joint 24a, and at a second end to the brace 32 by a pin joint 32a. Similarly, the support arm 30 is pivotally coupled at a first end to the bracket member 24 by a pin joint 24b, and at a second end to the brace 32 by a pin joint 32b.

The pin joint 32a is arranged above the pin joint 32b. A dashed line 32c connects the center points of the pin joints 32a and 32b for illustrative purposes. Likewise, the pin joint 24a is arranged above the pin joint 24b as shown in FIG. 3. A dashed line 24c connects the center points of the pin joints 24a and 24b for illustrative purposes.

The cab riser apparatus 14 is a parallel linkage apparatus. That is, the support arms 28 and 30 and the lines 24c and 32c form a parallelogram. In this arrangement, support arms 28 and 30 will always be parallel to one another. Likewise, the lines 24c and 32c will always be parallel to one another. The line 32c is perpendicular to the platform member 13, as shown in FIGS. 1 and 2. Therefore, the platform member 13 remains substantially horizontal relative to the frame member 16 as the cab 12 is raised up and lowered down.

The cab rising apparatus 14 is relatively compact. More specifically, as shown in FIGS. 1 and 2, the cab rising apparatus does not utilize a significant portion of the overall length of the tractor 10. This feature is particularly useful in that more usable area of the tractor 10 is available for other components, e.g. the engine, than is available in tractors which contain cab rising apparatus which are not as compact.

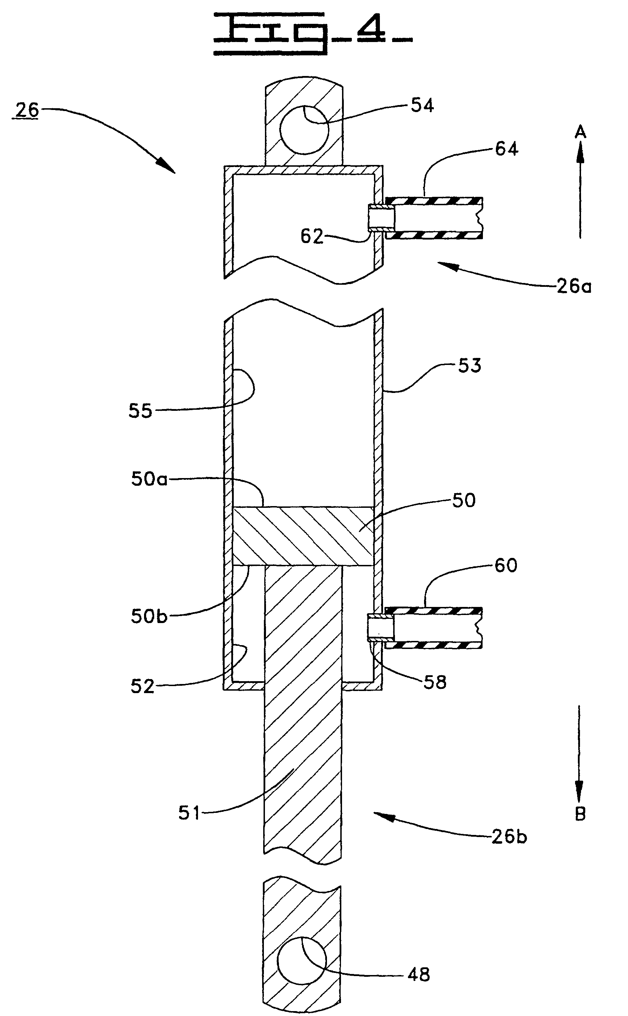

The hydraulic cylinder 26 is used in the cab riser apparatus 14 in order to raise the cab 12. The hydraulic cylinder is shown in more detail in FIG. 4. The hydraulic cylinder 26 includes a head end 26a and a rod end 26b. Moreover, the hydraulic cylinder 26 includes a piston 50, a rod 51, and a housing 53. A hole 54 is defined in the housing 53 such that the head end 26a may be connected to the pin joint 24a as shown in FIG. 3. Moreover, a hole 48 is defined in a first end of the rod 51 as shown in FIG. 4 such that the rod end 26b may be connected to the pin joint 32b as shown in FIG. 3.

The rod 51 is connected at a second end to the piston 50. The hydraulic cylinder 26 includes a first fluid area 52 and a second fluid area 55 each contain a volume of a hydraulic fluid (not shown) therein. Moreover, a pair of couplings 58 and 62 are defined in the housing 53. The couplings 58 and 62 are connected to a fluid pump and reservoir (not shown) via a pair of fluid lines 60 and 64, respectively, in order to provide for the flow of hydraulic fluid into and out of the fluid areas 52 and 55, respectively.

In order to raise the cab 12 (FIGS. 1 and 2), hydraulic fluid is pumped under pressure into the fluid area 52 via the fluid line 60. When the force applied to the rod-side surface 50b is sufficient in magnitude, the piston 50, and therefore the rod 51, is urged in the general direction of the arrow A of FIG. 4.

In order to lower the cab 12, hydraulic fluid is pumped under pressure into the fluid area 55 via the fluid line 64. When the force applied to the head-side surface 50a is sufficient in magnitude, the piston 50, and therefore the rod 51, is urged in the general direction of the arrow B of FIG. 4, thus lowering the cab 12 to its normal position as shown in FIG. 1.

When the cab riser apparatus 14 is in its normal (i.e. lowered) position, as shown in FIG. 1, the hydraulic cylinder 26 is at a maximum extension. The rod 51 is fully protruding from the housing 53. When the cab riser apparatus 14 is in the raised position, as in FIG. 2, the hydraulic cylinder 26 is at a minimum extension. The rod 51 is fully retracted into the housing 53.

The aforementioned configuration, wherein the hydraulic cylinder 26 is in a retracted position when the cab 12 is in a raised position, enhances the stability of cab riser apparatus 14. The cab 12, while in the raised position, is less likely to move or "wobble" due to forces encountered during the use of the tractor 10.

Additional hydraulic cylinders may be added to the cab riser apparatus 14. In particular, a second hydraulic cylinder could be connected to the bracket member 24 in the same configuration as the hydraulic cylinder 26, i.e. the second hydraulic cylinder is in a retracted position when the cab 12 is in a raised position. However, the second hydraulic cylinder may be located on the side of the bracket 24 opposite the hydraulic cylinder 26. The addition of the second hydraulic cylinder may increase the amount of lifting force generated by the cab rising apparatus 14.

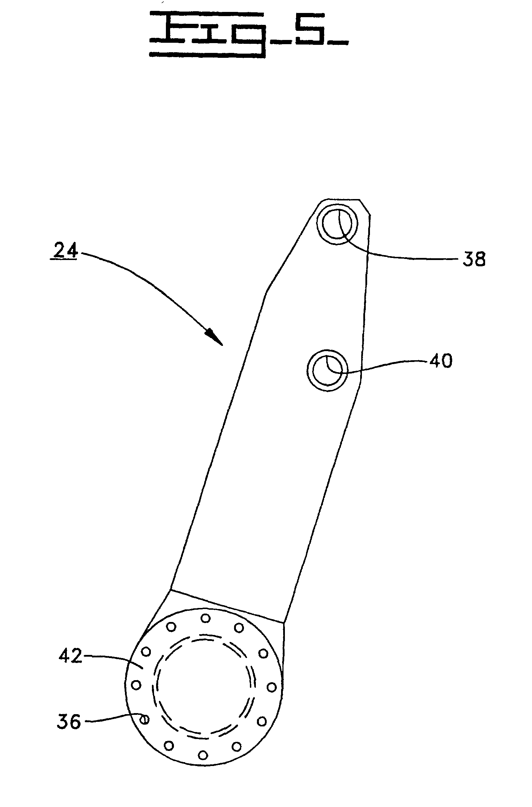

Referring now to FIG. 5, there is shown the bracket member 24 of the cab riser apparatus 14 with the support arms 28, 30 and the hydraulic cylinder 26 removed. The bracket member 24 has a pair of holes 38 and 40 defined therein. The hole 38 accommodates the pin joint 24a of FIG. 3. The hole 40 accommodates the pin joint 24b of FIG. 3.

The bracket member 24 further includes a flange 42. The flange 42 may be integrated into the bracket member 24, or it may be a separate component mechanically fastened, i.e. welded, to the bracket member 24. The flange 42 has a plurality of holes 36. The holes 36 are used to bolt, or similarly fasten, the bracket member 24, and therefore the cab 12 via the support arms 28, 30, to the frame member 16 of FIGS. 1 and 2.

Providing a bracket member 24 which is separate from the frame member 16 prior to final assembly simplifies the manufacturing process of the tractor 10. It is simpler to fabricate a separate frame member 16, and subsequently bolt the bracket member 24 thereto, then it is to fabricate a frame member 16 with an integrated bracket member 24.

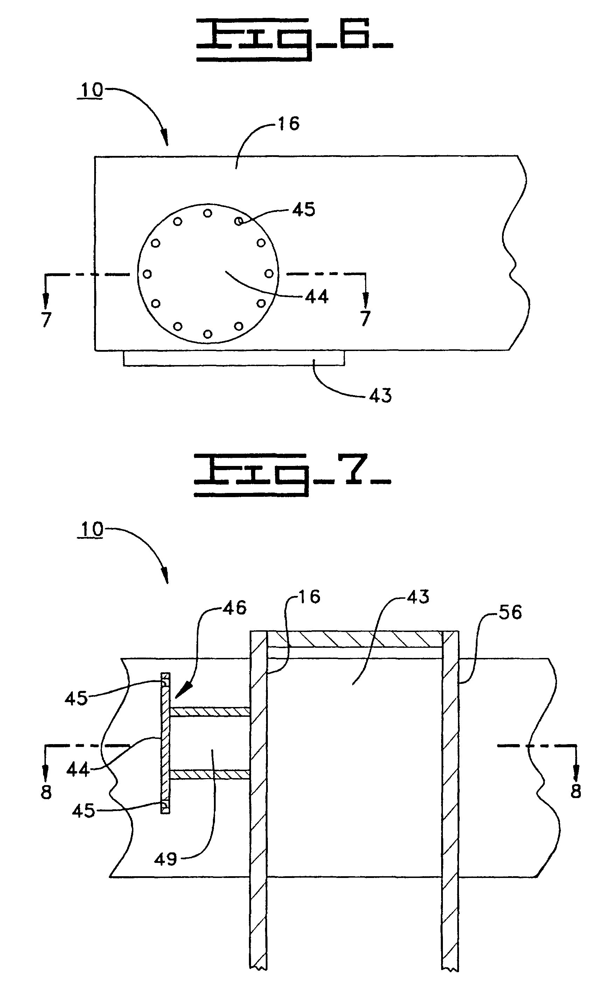

Referring now to FIG. 6, there is shown the frame member 16. Connected to the frame member 16 is a mating flange 44 substantially similar to the flange 42 of the bracket member 24 of FIG. 5. The mating flange 44 has a plurality of holes 45 defined therein. The holes 45 receive bolts, or similar fasteners, in order to couple the flange 42 to the mating flange 44. The mating flange 44 is positioned adjacent to a frame support member 43 as shown in FIG. 6. The mating flange 44 is welded to the frame support member 43 and the frame member 16 as discussed below.

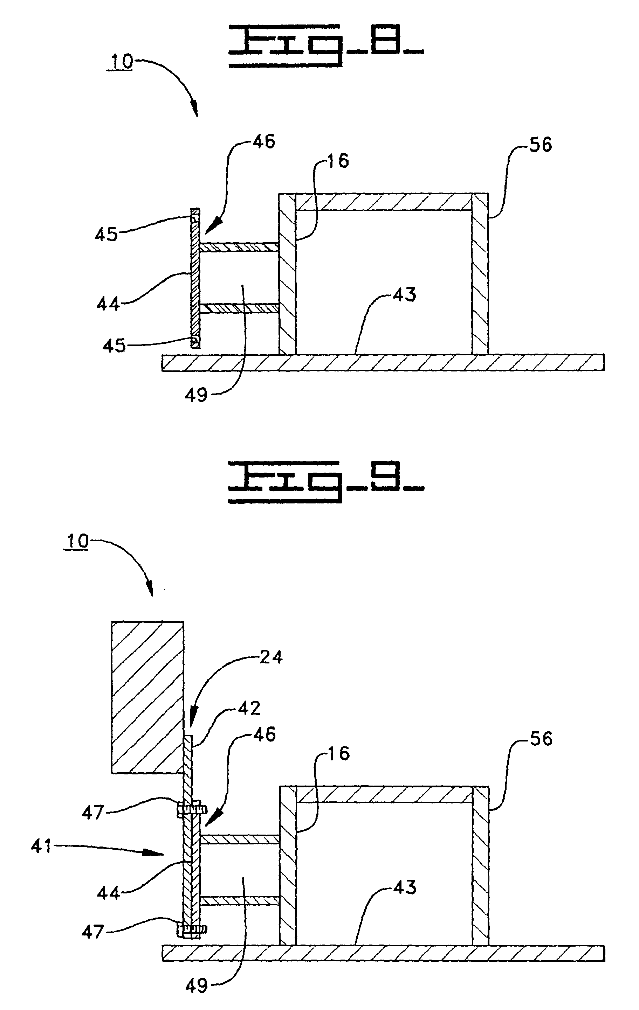

FIGS. 7 and 8 show the frame support member 43 which couples the frame member 16 (shown in FIGS. 1 and 2) to a second frame member 56. The frame member 56 is identical to the frame member 16 and is disposed parallel thereto, thereby cooperating with the frame member 16 and the frame support member 43 to form the main supporting elements of the body 11 and the grapple arm (not shown).

The mating flange 44 is secured to the frame support member 43 and to the frame member 16 by a mating flange support member 49. The mating flange support member is cylindrical in shape, and is welded at a first end to the frame member 16, and at a second end to the mating flange 44.

Collectively, the mating flange 44 and the mating flange support member 49 form a weld group 46. As shown in FIG. 8, the weld group 46 is welded to both the frame member 16 and the frame support member 43. This welding configuration provides the structural strength necessary to support the cab riser apparatus 14 and the cab 12 during the use of the tractor 10.

Referring now to FIG. 9, there is shown the flange 42 of the bracket member 24 coupled to the weld group 46 with a plurality of bolts 47. The bolts 47 are received into the holes 36 of the flange 42 (FIG. 5) and are secured into the holes 45 of the mating flange 44 (FIG. 6). Collectively, the bracket member 24, the flange 42, the bolts 47, and the weld group 46 form a bracket assembly 41.

The fabrication of the tractor 10 is simplified by the use of separate, discrete components. In particular, the frames 16, 56 and the frame support member 43 are of a configuration commonly used on other current tractor designs. A sub-assembly is formed by welding the mating flange 44 to the mating flange support member 49 to create the weld group 46, as described above. Thereafter, the weld group 46 is welded to the frame member 16 and the frame support member 43 as shown in FIGS. 6-9.

Subsequently, during a final assembly process, the bracket member 24 is fastened to the weld group 46 as shown in FIG. 9. Thereafter, the remaining components of the cab riser apparatus 14, i.e. the support arms 28, 30 and the hydraulic cylinder 26, are coupled to the bracket member 24 and the brace 32 (see FIG. 3).

The aforementioned fabrication process reduces the cost associated with the construction of the tractor 10. A separate frame member 16, with the bracket member 24 integrated therein, does not need to be designed. The same frame member 16 can be used in tractors which contain a cab riser apparatus and those tractors which do not contain such apparatus. Moreover, a frame with an integrated bracket member, is more difficult and cumbersome to move throughout the manufacturing plant than is the frame member 16 of the present invention, wherein only the welding group 46 is attached to the frame member 16 prior to final assembly.

Further, the angle of the bracket member 24 relative to the frame member 16 may be altered to facilitate the proper operation of the cab rising apparatus 14. In particular, the bolts 47 (FIG. 9) can be removed from the flange 42, thereby allowing the bracket member 24 to be lifted away from the mating flange 44. The flange 42 may then be rotated in either a clockwise or counter-clockwise direction in increments defined by the locations wherein the holes 36 and the holes 45 align. Thereafter, the bolts 47 may be reinstalled, as shown in FIG. 9. On the contrary, the angle of the bracket member relative to the frame may not be adjusted easily on known tractor designs wherein the bracket member is integrated in the frame.

## Claims

1. An apparatus (14) for moving a tractor cab (12) relative to a tractor body (11), containing:
a bracket member (24) having a first end and a second end, said first end of said bracket member (24) being secured to said tractor body (11) and said second end of said bracket member (24) being spaced apart from said tractor body (11);
a first support arm (28) having a first end and a second end, said first end of said first support arm (28) being secured to said tractor cab (12) and said second end of said first support arm (28) being secured to said second end of said bracket member (24); and
a hydraulic cylinder (26) having a first end (26b) and a second end (26a), said first end (26b) of said hydraulic cylinder (26) being secured to said tractor cab (12) and said second end (26a) of said hydraulic cylinder (26) being secured to said second end of said bracket member (24), **characterized in that** said hydraulic cylinder (26) being at a minimum extension when said tractor cab (12) is moved to a raised position relative to said tractor body (11), and said hydraulic cylinder (26) is at a maximum extension when said tractor cab (12) is moved to a normal position relative to said tractor body (11).

2. The apparatus (14) of claim 1, further comprising a brace (32) mounted on said tractor cab (12), wherein:
said first end of said first support arm (28) is coupled to said brace (32), and
said first end of said hydraulic cylinder (26) is coupled to said brace (32).

3. The apparatus (14) of claims 1 or 2, further comprising a second support arm (30) having a first end and a second end, said first end of said second support arm (30) being secured to said tractor cab (12) and said second end of said second support arm (30) being secured to said second end of said bracket member (24).

4. The apparatus (14) of claim 3, wherein said first support arm (28), said second support arm (30), said bracket member (24) and said brace (32) define a parallelogram linkage mechanism.

5. The apparatus (14) of claim 4, wherein:
said tractor cab (12) includes a substantially planar platform member; and
said parallelogram linkage mechanism causes said substantially planar platform member to remain substantially horizontal while said tractor cab (12) is being moved between the normal position and the raised position.

6. The apparatus (14) of claim 3, wherein said first support arm (28) remains parallel to said second support arm (30) while said tractor cab (12) is being moved between the normal position and the raised position.

7. The apparatus (14) of claim 1, wherein said hydraulic cylinder (26) has a rod (51) and housing (53) and at the minimum extension of the hydraulic cylinder (26) the rod (51) is retracted into the housing (53).

8. A tractor (10) having a tractor cab (12) which is movable relative to a tractor body (11), a frame member (16) mounted in said tractor body (11), and cab riser apparatus (14) according to any of the preceding claims being capable of moving said tractor cab (12) relative to said tractor body (11), **characterized by**:
a first mounting member (44) secured to said frame member (16);
said bracket (24) for supporting the cab riser apparatus (14) thereon; and
a second mounting member (42) secured to said bracket (24), and means for securing said first mounting member (42) to said second mounting member (44).

9. The tractor (10) of claim 8, wherein:
said first mounting member includes a first flange (44) having a substantially circular shape; and
said second mounting member includes a second flange (42) having a substantially circular shape, and including a plurality of bolts (47) which are positionable within said plurality of first apertures and said plurality of second apertures.

10. The tractor (10) of claim 8, wherein said first mounting member (44) is spaced apart from said frame member (16) by a support member (49).

11. The tractor (14) of claim 8, wherein said securing means includes:
a plurality of first apertures (45) defined in said first mounting member (44);
a plurality of second apertures (36) defined in said second mounting member (42); and
a plurality of bolts (47) which are positionable within said plurality of first apertures (45) and said plurality of second apertures (36).

12. The tractor (10) of claim 8, wherein the first mounting member (44) and the second mounting member (42) are secured to one another at a first orientation and can be separated and resecured to each other at a second orientation which is different from the first orientation.

## Patentansprüche

1. Eine Vorrichtung (14) zur Bewegung einer Traktorkabine (12) relativ zu einem Traktorkörper (11), wobei Folgendes vorgesehen ist:
ein Bügelglied (24) mit einem ersten und einen zweiten Ende, wobei das erste Ende des Bügelglieds (24) an dem Traktorkörper (11) befestigt ist und wobei das zweite Ende des Bügelglieds (24) von dem Traktorkörper (11) beabstandet ist;
ein erster Tragarm (28) mit einem ersten und einen zweiten Ende, wobei das erste Ende des ersten Tragarms (28) an der Traktorkabine (12) befestigt ist, und wobei das zweite Ende des ersten Tragarms (28) an dem zweiten Ende des Bügelglieds (24) befestigt ist; und
ein Hydraulikzylinder (26) mit einem ersten Ende (26b) und einem zweiten Ende (26a), wobei das erste Ende (26b) des Hydraulikzylinders (26) an der Traktorkabine (12) befestigt ist und das zweite Ende (26a) des Hydraulikzyinders (26) an dem zweiten Ende des Bügels (24) befestigt ist,
**dadurch gekennzeichnet, dass** der Hydraulikzylinder (26) sich auf einem minimalen Ausfahrzustand befindet, wenn die Traktorkabine (12) auf eine angehobene Position bezüglich des Traktorkörpers (11) bewegt ist, und wobei sich der Hydraulikzylinder (26) auf einer maximalen Ausfahrposition befindet, wenn die Traktorkabine (12) in eine Normalposition relativ zum Traktorkörper (11) bewegt ist.

2. Vorrichtung (14) nach Anspruch 1, wobei ferner eine Strebe (32) an der Traktorkabine (12) angebracht ist, und wobei Folgendes vorgesehen ist:
das erste Ende des ersten Tragarms (28) ist mit der Strebe (32) gekuppelt, und
das erste Ende des Hydraulikzylinders (26) ist mit der Strebe (32) gekuppelt.

3. Vorrichtung (14) nach Anspruch 1 oder 2, wobei ferner ein zweiter Tragarm (30) vorgesehen ist, der ein erstes und ein zweites Ende besitzt, wobei das erste Ende des zweiten Tragarms (30) an der Traktorkabine (12) befestigt ist, und wobei das zweite Ende des zweiten Tragarms (30) an dem zweiten Ende des Bügelglieds (24) befestigt ist.

4. Vorrichtung (14) nach Anspruch 3, wobei der erste Tragarm (28), der zweite Tragarm (30), das Bügelglied (24) und die Strebe (32) einen Parallelogramm-Gelenkmechanismus definieren.

5. Vorrichtung (14) nach Anspruch 4, wobei die Traktorkabine (12) ein im Wesentlichen ebenes Plattformglied aufweist;
wobei der Paralielogramm-Gelenkmechanismus bewirkt, dass das im Wesentlichen planare Plattformglied im Wesentlichen horizontal verbleibt, während die Traktorkabine (12) zwischen der Normalposition und der angehobenen Position bewegt wird.

6. Vorrichtung (14) nach Anspruch 3, wobei der erste Tragarm (28) parallel zu dem zweiten Tragarm (30) verbleibt, während die Traktorkabine (12) zwischen der Normalposition und der angehobenen Position bewegt wird.

7. Vorrichtung (14) nach Anspruch 1, wobei der Hydraulikzylinder (26) eine Stange (51) und ein Gehäuse (53) aufweist, wobei in dem minimalen Ausfahrzustand des Hydraulikzylinders (26) die Stange (51) in das Gehäuse (53) zurückgezogen ist.

8. Traktor (10) mit einer Traktorkabine (12), die relativ zu einem Traktorkörper (11) bewegbar ist, ferner mit einem Rahmenglied (16) befestigt an dem Traktorkörper (11) und mit einer Kabinenanhebvorrichtung (14) gemäß einem der vorhergehenden Ansprüche zur Bewegung der Traktorkabine (12), relativ zum Traktorkörper, **gekennzeichnet durch**
ein erstes Befestigungsglied (44), befestigt an dem Rahmenglied (16); wobei der Bügel (24) zum Tragen der Kabine an der Vorrichtung (14) darauf vorgesehen ist; und
wobei ein zweites Befestigungsglied (42) an dem Bügel (24) befestigt ist und Mittel vorgesehen sind zur Befestigung des ersten Befestigungsglieds (42) an dem zweiten Befestigungsglied (44).

9. Traktor (10) nach Anspruch 8, wobei das erste Befestigungsglied einen ersten Flansch (44) aufweist mit einer im Wesentlichen kreisförmigen Gestalt; und
wobei das zweite Befestigungsglied einen zweiten Flansch (42) aufweist mit einer im Wesentlichen kreisförmigen Gestalt, und wobei schließlich eine Vielzahl von Bolzen (47) innerhalb der erwähnten Vielzahl von ersten Öffnungen und der erwähnten Vielzahl von zweiten Öffnungen positionierbar ist.

10. Traktor (10) nach Anspruch 8, wobei das erste Befestigungsglied (44) gegenüber dem Rahmenglied (16) durch ein Tragglied (49) beabstandet ist.

11. Traktor (14) nach Anspruch 8, wobei die Befestigungsmittel Folgendes aufweisen:
eine Vielzahl von ersten Öffnungen (45), definiert in dem ersten Befestigungsglied (44);
eine Vielzahl von zweiten Öffnungen (36), definiert in dem zweiten Befestigungsglied (42); und
eine Vielzahl von Bolzen (47), die innerhalb der erwähnten Vielzahl von ersten Öffnungen (45) und der erwähnten Vielzahl von zweiten Öffnungen (36) positionierbar sind.

12. Traktor (10) nach Anspruch 8, wobei das erste Befestigungsglied (44) und das zweite Befestigungsglied (42) aneinander mit einer ersten Orientierung befestigt sind und getrennt und wieder befestigt werden können aneinander mit einer zweiten Orientierung, die unterschiedlich von der ersten Orientierung ist.

## Revendications

1. Appareil (14) pour déplacer une cabine de tracteur (12) par rapport à un corps de tracteur (11), comprenant :
un élément de potence (24) ayant une première extrémité et une deuxième extrémité, la première extrémité de l'élément de potence (24) étant fixée au corps de tracteur (11) et la seconde extrémité de l'élément de potence (24) étant espacée de la cabine de tracteur (11) ;
un premier bras support (28) ayant une première extrémité et une seconde extrémité, la première extrémité du premier bras support (28) étant fixée à la cabine de tracteur (12), et la seconde extrémité du premier bras support (28) étant fixée à la seconde extrémité de l'élément de potence (24) ; et
un vérin hydraulique (26) ayant une première extrémité (26b) et une seconde extrémité (26a), la première extrémité (26b) du vérin hydraulique (26) étant fixée à la cabine de tracteur (12), et la seconde extrémité (26a) du vérin hydraulique (26) étant fixée à la seconde extrémité de l'élément de potence (24),
**caractérisé en ce que** le vérin hydraulique (26) est à une extension minimum quand la cabine de tracteur (12) est déplacée vers une position élevée par rapport au corps de tracteur (11) et le vérin hydraulique (26) est à une extension maximum quand la cabine de tracteur (12) est déplacée vers une position normale par rapport au corps de tracteur (11).

2. Appareil (14) selon la revendication 1, comprenant en outre une attache (32) montée sur la cabine de tracteur (12), dans lequel :
la première extrémité du premier bras support (28) est couplée à l'attache (32), et
la première extrémité du vérin hydraulique (26) est couplée à l'attache (32).

3. Appareil (14) selon la revendication 1 ou 2, comprenant en outre un second bras support (30) ayant une première extrémité et une seconde extrémité, la première extrémité du second bras support (30) étant fixée à la cabine de tracteur (12) et la seconde extrémité du second bras support (30) étant fixée à la seconde extrémité de l'élément de potence (24).

4. Appareil (14) selon la revendication 3, dans lequel le premier bras support (28), le second bras support (30), l'élément de potence (24) et l'attache (32) définissent un mécanisme de liaison à un parallélogramme.

5. Appareil (14) selon la revendication 4, dans lequel :
la cabine de tracteur (12) comprend un élément de plateforme sensiblement plan ; et
le mécanisme de liaison à un parallélogramme amène l'élément de plateforme sensiblement plan à rester sensiblement horizontal quand la cabine de tracteur (12) est déplacée entre la position normale et la position élevée.

6. Appareil (14) selon la revendication 3, dans lequel le premier bras support (28) reste parallèle au second bras support (30) quand la cabine de tracteur (12) est déplacée entre la position normale et la position élevée.

7. Appareil (14) selon la revendication 1, dans lequel le vérin hydraulique (26) comprend une tige (51) et un logement (53) et, pour l'extension minimum du vérin hydraulique (26), la tige (51) est rétractée dans le logement (53).

8. Tracteur (10) comprenant une cabine de tracteur (12) qui est mobile par rapport à un corps de tracteur (11), un élément de châssis (16) monté dans le corps de tracteur (11) et un appareil de levage de cabine (14) selon l'une quelconque des revendications précédentes apte à déplacer la cabine de tracteur (12) par rapport au corps de tracteur (11), **caractérisé par** :
un premier élément de montage (44) fixé à l'élément de châssis (16) ;
la potence (24) pour supporter l'appareil de levage de cabine (14) sur celle-ci ; et
un second élément de montage (42) fixé à la potence (24) et un moyen pour fixer le premier élément de montage (42) au second élément de montage (44).

9. Tracteur (10) selon la revendication 8, dans lequel :
le premier élément de montage comprend un premier flasque (44) ayant une forme sensiblement circulaire ; et
le second élément de montage comprend un second flasque (42) ayant une forme sensiblement circulaire et comprenant une pluralité de boulons (47) qui peuvent être positionnés dans la pluralité de plusieurs ouvertures et la pluralité de secondes ouvertures.

10. Tracteur (10) selon la revendication 8, dans lequel le premier élément de montage (44) est espacé de l'élément de châssis (16) par un élément support (49).

11. Tracteur (14) selon la revendication 8, dans lequel le moyen de fixation comprend :
une pluralité de premières ouvertures (45) définies dans le premier élément de montage (44) ;
une pluralité de secondes ouvertures (36) définies dans le second élément de montage (42) ; et
une pluralité de boulons (47) qui peuvent être disposés dans la pluralité de premières ouvertures (45) et la pluralité de secondes ouvertures (36).

12. Tracteur (10) selon la revendication 8, dans lequel le premier élément de montage (44) et le second élément de montage (42) sont fixés l'un à l'autre selon une première orientation et peuvent être séparés et refixés l'un à l'autre selon une seconde orientation distincte de la première orientation.
